# EUROPEAN PATENT APPLICATION

(11) **EP 4 538 040 A1**
(43) Date of publication of application: **16.04.2025**
(21) Application number: 24731804.1
(22) Date of filing: 19.03.2024
(51) Int. Cl.: B32B 27/32, B32B 27/08, B32B 7/12, E04F 15/10, B29D 7/00

(54) **SEMI-HARD POLYPROPYLENE FLOOR AND PREPARATION METHOD THEREFOR**

(30) Priority: 01.09.2023 CN 202311126267
(71) Applicant: Changzhou Bemate Home Technology Co., Ltd., Changzhou City, Jiangsu 213100 (CN)
(72) Inventor: ZHANG, Xiaoling, Changzhou Jiangsu 213100 (CN); LI, Yanhui, Changzhou Jiangsu 213100 (CN); DONG, Junxiang, Changzhou Jiangsu 213100 (CN)
(74) Representative: Vitina, Maruta
(86) International application number: PCT/CN2024/082516
(87) International publication number: WO 2025/044165

(57) **Abstract**

A semi-rigid polypropylene floorboard includes a polypropylene wear-resistant layer, a polypropylene decorative layer, an adhesive layer, a polypropylene substrate layer and an enhancement layer arranged from top to bottom in sequence. The adhesive layer is made of a maleic acid-modified polypropylene resin, and a thickness of the adhesive layer is 0.05 mm-0.2 mm. The enhancement layer is made of a modified polypropylene fiber. A preparation of the semi-rigid polypropylene floorboard is also provided, in which the polypropylene wear-resistant layer, the polypropylene decorative layer, the adhesive layer, the polypropylene substrate layer and the enhancement layer are subjected to hot-pressing lamination, tempering, punching and trimming to obtain the desired product.

## Description

### TECHNICAL FIELD

This application relates to floorboard production technology, and more particularly to a semi-rigid polypropylene floorboard and a preparation method thereof.

### BACKGROUND

Compared to the rigid click-lock polyvinyl chloride (PVC) floor, the semi-rigid (PVC) floorboard has advantages of thin thickness, good flexibility and toughness and low price, and thus has been widely used. However, because of the presence of halogens in the PVC resin, various health and environmental protection-associated problems may occur during use. As higher and higher requirements have been put forward for the environmental protection performance of the floor, it is urgent to develop a new environmentally-friendly semi-rigid floorboard to replace the PVC floor.

As a colorless, odorless and non-toxic thermoplastic resin material, polypropylene (PP) has attracted considerable attention due to its stable performance, low density, excellent chemical resistance, heat resistance and electrical insulation, high mechanical strength and high wear resistance.

In order to achieve the commercialization, the semi-rigid floorboard is needed to reach a high filling rate (generally more than 70%), and because of the small thickness (generally less than 3mm), there are problems of easy deformation and insufficient strength. At present, in order to enhance the adhesion of the polypropylene resin and the decoration layer, a maleic acid-modified polypropylene resin is often selected as the main resin component of the highly-filled substrate of the polypropylene substrate layer. Due to the large thickness of the polypropylene substrate layer, the amount of maleic acid modified polypropylene is large, resulting in high raw material cost.

### SUMMARY

In view of the above problems, this application provides a semi-rigid polypropylene floorboard with improved toughness and strength and lowered cost, and a preparation method thereof.

In order to achieve the above objectives, this application provides a semi-rigid polypropylene floorboard, comprising: a polypropylene wear-resistant layer, a polypropylene decorative layer, an adhesive layer, a polypropylene substrate layer and an enhancement layer arranged in sequence;
wherein the adhesive layer is made of a maleic acid-modified polypropylene resin; and a thickness of the adhesive layer is 0.05 mm-0.2 mm; and
the enhancement layer is made of modified polypropylene fiber.

In an embodiment, the semi-rigid polypropylene floorboard further comprises a balance layer; wherein the balance layer is located between the polypropylene substrate layer and the enhancement layer, and a thickness of the balance layer is 0.1 mm-0.5 mm.

In an embodiment, a side of the polypropylene wear-resistant layer away from the polypropylene decorative layer is provided with a stain-resistant transparent scratch-resistant layer.

In an embodiment, the stain-resistant transparent scratch-resistant layer is prepared by coating with a modified ultraviolet (UV)-curable clear lacquer at a coating amount of 15 g/m²-30 g/m²;
the polypropylene wear-resistant layer is made of a transparent wear-resistant polypropylene resin, and a thickness of the polypropylene wear-resistant layer is 0.15 mm-0.55mm;
the polypropylene decorative layer is made of a printed polypropylene resin, and a thickness of the polypropylene decorative layer is 0.07 mm-0.15 mm; and
a thickness of the enhancement layer is 0.1 mm-0.3 mm.

In an embodiment, a thickness of the polypropylene substrate layer is 4 mm-8 mm.

In an embodiment, the polypropylene substrate layer comprises:
65-75 parts by weight of an inorganic filler;
15-25 parts by weight of a polypropylene resin;
1-5 parts by weight of a polyethylene resin;
1-5 parts by weight of a toughener;
0.5-1 part by weight of a stabilizer;
0.2-0.5 part by weight of a compatibilizer;
0.02-0.05 part by weight of an antioxidant; and
0.2-1 part by weight of a lubricant.

In an embodiment, the inorganic filler is selected from the group consisting of silicon dioxide, calcium carbonate, aluminum oxide, zinc oxide, magnesium oxide, mica powder, kaolin and a combination thereof;
the polypropylene resin is selected from the group consisting of isotactic polypropylene, syndiotactic polypropylene, atactic polypropylene and a combination thereof;
the polyethylene resin is selected from the group consisting of low-density polyethylene (LDPE), linear low density polyethylene (LLDPE), medium density polyethylene (MDPE) and a combination thereof;
the toughener is selected from the group consisting of polyolefin elastomer (POE), ethyl vinyl acetate (EVA), ethylene propylene diene monomer (EPDM), styrene butadiene styrene (SBS) and a combination thereof;
the stabilizer is selected from the group consisting of a hindered amine light stabilizer, a polyolefin light stabilizer, a benzophenone stabilizer, a salicylic acid stabilizer and a combination thereof;
the compatibilizer is selected from the group consisting of maleic anhydride (MAH), ethyleneglycidyl methacrylate (EGMA), styrene-maleic anhydride (SM), ethylene-butyl acrylate, maleic anhydride and a combination thereof;
the antioxidant is selected from the group consisting of 2-(tert-butyl)-6-(5-chloro-2H-benzo[d][1,2,3]triazol-2-yl)-4-methylphenol, pentaerythritol tetrakis(3-(3,5-di-tert-butyl-4-hydroxyphenyl) propionate), octadecyl-3-(3',5'-di-t-butyl-4'-hydroxyphenyl)propionate, 4,4'-thio-bis(6-tert-butyl-m-methyl phenol) and a combination thereof; and
the lubricant is selected from a group consisting of paraffin, oxidized polyethylene wax, stearic acid and a combination thereof.

This application also provides a method for preparing the semi-rigid polypropylene floorboard, comprising:
subjecting the polypropylene wear-resistant layer, the polypropylene decorative layer, the adhesive layer, the polypropylene substrate layer and the enhancement layer to a hot-pressing lamination to obtain a semi-finished floorboard; wherein the hot-pressing lamination is performed at 150°C-160 °C and 8 MPa-15 MPa for 20 min-40 min;
tempering the semi-finished floorboard at 75 °C-95 °C for 2 min-5 min to obtain a tempered product; and
subjecting tempered product to punching and trimming to reach a required size, so as to obtain the semi-rigid polypropylene floorboard.

In an embodiment, the method for preparing the semi-rigid polypropylene floorboard further comprises: before tempering, coating a UV-curable clear lacquer on the semi-finished floorboard after the hot-pressing lamination through a coating machine followed by UV curing to obtain the stain-resistant transparent scratch-resistant layer; wherein a coating amount of the UV-curable clear lacquer is 15 g/m²-30 g/m², and an energy of the UV curing is 400 mj/cm²-800 mj/cm².

In an embodiment, the enhancement layer comprises a first enhancement sub-layer and a second enhancement sub-layer; the polypropylene wear-resistant layer comprises a first polypropylene wear-resistant sub-layer and a second polypropylene wear-resistant sub-layer; the polypropylene substrate layer comprises a first polypropylene substrate sub-layer and a second polypropylene substrate sub-layer; the adhesive layer comprises a first adhesive sub-layer and a second adhesive sub-layer; the polypropylene decorative layer comprises a first polypropylene decorative sub-layer and a second polypropylene decorative sub-layer; and the hot-pressing lamination is performed through steps of:
stacking a first polyethylene terephthalate (PET) film, the first enhancement sub-layer, a first balance layer, the first polypropylene substrate sub-layer, the first adhesive sub-layer, the first polypropylene decorative sub-layer, the first polypropylene wear-resistant sub-layer, a first stain-resistant transparent scratch-resistant layer, a second PET film, a graining board, a third PET film, a second stain-resistant transparent scratch-resistant layer, the second polypropylene wear-resistant sub-layer, the second polypropylene decorative sub-layer, the second adhesive sub-layer, the second polypropylene substrate sub-layer, the second balance sub-layer, the second enhancement sub-layer and a fourth PET film in sequence from top to bottom followed by hot pressing for lamination to obtain the semi-finished floorboard; wherein the first PET film, the second PET film, the third PET film and the fourth PET film are each a high-transmittance PET film, and have a thickness of 0.1 mm-0.15 mm.

The present disclosure has the following beneficial effects.

The semi-rigid polypropylene floorboard provided herein includes the polypropylene wear-resistant layer, the polypropylene decorative layer, the adhesive layer, the polypropylene substrate layer and the enhancement layer arranged in sequence from top to bottom. The enhancement layer is made of a modified polypropylene fiber, which can improve the toughness and strength of the product, improve the adhesion between the product and the ground, and extend the service life of the product. In addition, the adhesive layer is made of the maleic acid-modified polypropylene, which can enhance the adhesion of the polypropylene resin and decorative layer. Moreover, the adhesive layer has a small thickness (0.05 mm-0.2mm), so that the consumption of the maleic acid-modified acrylic resin is reduced, allowing for a lowered overall cost.

### BRIEF DESCRIPTION OF THE DRAWINGS

To facilitate the understanding of technical solutions of embodiments of the present disclosure or the prior art, accompanying drawings needed in the description of embodiments or the prior art will be briefly introduced below. It is obvious that presented in the accompanying drawings are only some embodiments of the present disclosure, and those skilled in the art can obtain other drawings according to these accompanying drawings without making any creative effort.

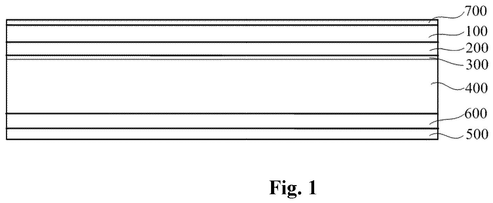

Fig. 1 schematically shows a structure of a semi-rigid polypropylene floorboard according to an embodiment of the present disclosure.

In the figure: 100, polypropylene wear-resistant layer; 200, polypropylene decorative layer; 300, adhesive layer; 400, polypropylene substrate layer; 500, enhancement layer; 600, balance layer; and 700, stain-resistant transparent scratch-resistant layer.

The objects, function features and advantages of the present disclosure will be further described below with reference to the accompanying drawings and embodiments.

### DETAILED DESCRIPTION OF EMBODIMENTS

The present disclosure will be clearly and completely described below with reference to the accompanying drawings in embodiments. It is obvious that the embodiments described herein are only part of embodiments of the present disclosure rather than all embodiments. And any other embodiments made by those skilled in the art based on the embodiments of the present disclosure without creative effort shall fall within the scope of the present disclosure.

It should be noted that the terms, such as "up", "down", "left", "right", "front", "rear" and other directional indications used herein, are only for illustrating relative position relationship and motion between components in a specific state (as shown in accompanying drawings). If the specific state changes, the directional indication accordingly changes. In addition, the terms "first" and "second" are only used for distinguishment rather than indicating or implying the relative importance and the number of the indicated technical features. Therefore, a feature defined with "first" or "second" may explicitly or implicitly indicates the inclusion of at least one of such features. Besides, the term "and/or" used herein includes three schemes, for example, "A" and/or "B" includes solution "A", solution "B", and a combination thereof. Technical solutions of embodiments can be combined with each other as long as the combined solution can be implemented by those skilled in the art. When a combination of the technical solutions is contradictory or cannot be realized, it should be considered that such a combination does not exist and is not within the scope of the present disclosure.

Referring to Fig. 1, the present disclosure provides a semi-rigid polypropylene floor, including a polypropylene wear-resistant layer 100, a polypropylene decorative layer 200, an adhesive layer 300, a polypropylene substrate layer 400 and an enhancement layer 500 arranged in sequence. The adhesive layer 300 is made of a maleic acid-modified polypropylene resin, and a thickness of the adhesive layer 300 is 0.05 mm-0.2 mm. And the enhancement layer 500 is made of modified polypropylene fiber.

The semi-rigid polypropylene floorboard of the present disclosure includes the polypropylene wear-resistant layer 100, the polypropylene decorative layer 200, the adhesive layer 300, the polypropylene substrate layer 400 and the enhancement layer 500 arranged in sequence. The enhancement layer 500 is configured to improve a toughness and strength of the product. The enhancement layer 500 is made of the modified polypropylene fiber, which improves the toughness and strength of the product, improves the adhesion between a floorboard product and the ground, and ensures a service life of the floorboard product. **In** addition, the adhesive layer 300 is made of the maleic acid-modified polypropylene resin, which can solve poor adhesion of polypropylene resin and a decorative layer. The adhesive layer 300 has a small thickness (0.05 mm-0.2mm), so that the consumption of the maleic acid-modified acrylic resin is reduced, allowing for a lowered raw material cost. The enhancement layer 500 is provided, so that the floorboard of the present disclosure has high strength, and the semi-rigid polypropylene floorboard is obtained. There is no need to slot the semi-rigid polypropylene floorboard, which saves click-lock cost. The maleic acid-modified polypropylene resin is made as follows:
evenly mixing 80-120 parts by weight of a polypropylene resin, 3-5 parts by weight of maleic anhydride, 0.3-0.8 part by weight of isopropylbenzene peroxide and 0.4-0.6 part by weight of an antioxidant 1010, followed by melt extrusion at 190 °C-230 °C.

In an embodiment, the enhancement layer 500 can improve the adhesion between the floorboard product and the ground during a product paving process. Because the semi-rigid polypropylene floorboard paving generally needs to be glued to the ground, if there is no the enhancement layer 500, there will be a problem of insufficient adhesion between the semi-rigid polypropylene floorboard and the ground, resulting in degumming during use.

In an embodiment, the maleic acid modification is to graft the maleic anhydride to a polypropylene molecular chain through a special reaction. The maleic acid molecular chain contains an active group, which can react with -NH₂, -OH and other polar groups to form a good chemical bond, so as to improve the adhesion between the adhesive layer 300 and the decorative layer.

In an embodiment, the present disclosure can prepare a high filling semi-rigid polypropylene floorboard with excellent flexibility without adding a plasticizer through a special formulation design.

In this embodiment, the polypropylene wear-resistant layer 100 is made of a transparent material. In an embodiment, the polypropylene decorative layer 200 is provided, so that the floorboard product looks more beautiful. The polypropylene wear-resistant layer 100 protects the polypropylene decorative layer 200. Because the polypropylene wear-resistant layer 100 is made of the transparent material, the polypropylene wear-resistant layer 100 does not block the polypropylene decorative layer 200. Wear resistance is an important indicator of the service life of the floorboard, once the polypropylene wear-resistant layer 100 is destroyed, a surface color pattern and an overall structure of the polypropylene decorative layer 200 will be destroyed, which affects appearance and use of the floor.

In an embodiment, referring to Fig. 1, the semi-rigid polypropylene floorboard further includes a balance layer 600. The balance layer 600 is located between the polypropylene substrate layer 400 and the enhancement layer 500. A top surface of the balance layer 600 is connected with the polypropylene substrate layer 400, and a bottom surface of the balance layer 600 is connected with the polypropylene enhancement layer 500. In an embodiment, an ingredient of the polypropylene decorative layer 200 and the polypropylene wear-resistant layer 100 on the polypropylene substrate layer 400 is a polypropylene resin without filler. Compared to a highly filled polypropylene substrate layer 400, the polypropylene decorative layer 200 and the polypropylene wear-resistant layer 100 are greatly affected by temperature changes and external extrusion deformation, and it is easy to cause product warping deformation because of their large shrinkage. Such problem can be solved by, between the polypropylene substrate layer 400 and the enhancement layer 500, adding the balance layer 600 below the polypropylene substrate layer 400, and the top surface of the balance layer 600 is connected with the polypropylene substrate layer 400. The balance layer 600 is configured to form a good equilibrium stress with the polypropylene decorative layer 200 and the polypropylene wear-resistant layer 100 on the polypropylene substrate layer 400, which avoids product warping caused by shrinkage of the polypropylene decorative layer 200 and the polypropylene wear-resistant layer 100 affected by continuous external forces and temperature. The balance layer 600 is a polypropylene resin without or with a small amount of filler. And the balance layer 600 can change its filler level and thickness to change its heat shrinkage and realizes shrinkage balance with the polypropylene decorative layer 200 and the polypropylene wear-resistant layer 100 on the polypropylene substrate layer 400, so as to avoid product warping.

In an embodiment, the balance layer 600 includes: 0-60% by weight of an inorganic filler and 35-95% by weight of the polypropylene resin, where the polypropylene resin is a medium filling layer. And a thickness of the balance layer 600 is 0.2 mm-0.5 mm.

In an embodiment, referring to Fig. 1, a side of the polypropylene wear-resistant layer 100 away from the polypropylene decorative layer 200 is provided with a stain-resistant transparent scratch-resistant layer 700. In an embodiment, the stain-resistant transparent scratch-resistant layer 700 is configured to resist scratches on a surface of the floorboard product caused by sharp objects such as gravels from sole and the corner of the table in daily use. Once the surface is scratched, it not only affects the appearance, but also easily becomes dirty. The polypropylene wear-resistant layer 100 is configured to coordinate with the stain-resistant transparent scratch-resistant layer 700 to better protect the floorboard product. Because the stain-resistant transparent scratch-resistant layer 700 is also transparent, the polypropylene wear-resistant layer 100 and the stain-resistant transparent scratch-resistant layer 700 will not block the polypropylene decorative layer 200.

In an embodiment, the stain-resistant transparent scratch-resistant layer 700 is prepared by coating with a modified ultraviolet (UV)-curable clear lacquer at a coating amount of 15 g/m²-30 g/m². In an embodiment, an ordinary UV wear-resistant layer is difficult to form enough adhesion with the polypropylene wear-resistant layer 100, such problem can be solved by modifying a main component of UV coating.

In an embodiment, a thickness of the polypropylene substrate layer 400 is 4 mm-8 mm.

In an embodiment, the polypropylene substrate layer 400 includes:
65-75 parts by weight of an inorganic filler;
15-25 parts by weight of a polypropylene resin;
1-5 parts by weight of a polyethylene resin;
1-5 parts by weight of a toughener;
0.5-1 part by weight of a stabilizer;
0.2-0.5 part by weight of a compatibilizer;
0.02-0.05 part by weight of an antioxidant; and
0.2-1 part by weight of a lubricant.

In an embodiment, the polypropylene resin is selected from the group consisting of isotactic polypropylene, syndiotactic polypropylene, atactic polypropylene and a combination thereof with a melt index is 5 g/10 min-15 g/10 min. In an embodiment, the polypropylene resin is a mixture of the syndiotactic polypropylene and the atactic polypropylene. The polyethylene resin is selected from the group consisting of low-density polyethylene (LDPE), linear low density polyethylene (LLDPE), medium density polyethylene (MDPE) and a combination thereof. In an embodiment, the polyethylene resin is the LLDPE. The toughener is selected from the group consisting of polyolefin elastomer (POE), ethyl vinyl acetate (EVA), ethylene propylene diene monomer (EPDM), styrene butadiene styrene (SBS) and a combination thereof. In an embodiment, the toughener is POE. The inorganic filler is selected from the group consisting of silicon dioxide, calcium carbonate, aluminum oxide, zinc oxide, magnesium oxide, mica powder, kaolin and a combination thereof. In an embodiment, the inorganic filler is calcium carbonate. The stabilizer is selected from the group consisting of a hindered amine light stabilizer, a polyolefin light stabilizer, a benzophenone stabilizer, a salicylic acid stabilizer and a combination thereof. In an embodiment, the stabilizer is the polyolefin light stabilizer. The compatibilizer is selected from the group consisting of maleic anhydride (MAH), ethylene glycidyl methacrylate (EGMA), styrene-maleic anhydride (SM), 3200, CA100 and a combination thereof. In an embodiment, the compatibilizer is the MAH. The antioxidant is selected from the group consisting of 326, 1010, 1076, AO300 and a combination thereof. In an embodiment, the antioxidant is the AO300. The lubricant is selected from the group consisting of paraffin, OA6, stearic acid and a combination thereof. In an embodiment, the lubricant is the stearic acid. An obtained substrate layer 400 prepared by the above preferred scheme has a best process mixing compatibility, stable discharge speed, minimum thickness deviation and best ageing resistance.

### Raw material information

LLDPE: Yangzi Petrochemical YLF-1810;
POE: ExxonMobil 3980;
Calcium carbonate: Changzhou Rongao Chemical RA-1250;
Polyolefin light stabilizer: BASF 944;
MAH: ExxonMobil PO 1015;
Antioxidant: Milan Chemical A0300; and
Stearic acid: New energy technology enterprises 1842.

In an embodiment, the polypropylene wear-resistant layer 100 is made of a transparent wear-resistant polypropylene resin, and a thickness of the polypropylene wear-resistant layer 100 is 0.15 mm-0.55 mm. In an embodiment, an ordinary wear-resistant layer has slightly poor transmittance and wear resistance, and is not resistant to high temperature (generally less than 160 °C), and the polypropylene wear-resistant layer 100 made of the transparent wear-resistant polypropylene resin has higher transparency, its wear resistance is increased by more than 10%, and it can be resistant to a temperature of 170 °C.

In an embodiment, the polypropylene decorative layer 200 is made of a printed polypropylene resin, and a thickness of the polypropylene decorative layer 200 is 0.07 mm-0.15 mm. In an embodiment, a surface tension of an ordinary decorative layer is small, and wettability of the ordinary decorative layer is poor, which is difficult to print a good pattern, and temperature resistance of the ordinary decorative layer is slightly poor. The polypropylene decorative layer 200 prepared by the modified polypropylene resin improves surface wettability, thus enabling good pattern printing. At the same time, the temperature resistance of the polypropylene decorative layer 200 is improved.

In an embodiment, the enhancement layer 500 is made of modified polypropylene fiber, and a thickness of the enhancement layer 500 is 0.1 mm-0.3 mm. In an embodiment, the enhancement layer 500 prepared by the modified polypropylene fiber has better toughness and improves polarity, which is more conducive to laminate with the balance layer 600.

Referring to Fig. 1, the present disclosure also provides a method for preparing the semi-rigid polypropylene floorboard, including the following steps.

(S100) The polypropylene wear-resistant layer 100, the polypropylene decorative layer 200, the adhesive layer 300, the polypropylene substrate layer 400 and the enhancement layer 500 are subjected to a hot-pressing lamination to obtain a semi-finished floorboard, where the hot-pressing lamination is performed at 150°C-160 °C and 8 MPa-15 MPa for 20 min-40 min.

(S200) The semi-finished floorboard is tempered at 75 °C-95 °C for 2 min-5 min to obtain a tempered product.

(S300) The tempered product is subjected to punching and trimming to reach a required size, so as to obtain the semi-rigid polypropylene floorboard. In an embodiment, the step of the tempered product is subjected to punching and trimming is that four sides of the floorboard are trimmed which is similar to polishing, so that the four sides of the floorboard are straight and smooth, and there is no gap when assembling.

In an embodiment, the method for preparing the semi-rigid polypropylene floorboard further includes:
(S101) before tempering, a UV-curable clear lacquer is coated on the semi-finished floorboard after the hot-pressing laminations through a roll coating machine followed by UV curing to obtain the stain-resistant transparent scratch-resistant layer, where a coating amount of the UV-curable clear lacquer is 15 g/m²-30 g/m², and an energy of the UV curing is 400 mj/cm²-800 mj/cm². In an embodiment, the semi-finished floorboard is tempered after coating the UV-curable clear lacquer by the roll coating machine, which can effectively release stress inside the floorboard product and is conducive to improving dimensional stability of the floorboard product.

In an embodiment, the hot-pressing lamination is performed as follows. A first polyethylene terephthalate (PET) film, an enhancement layer 500, a balance layer 600, a polypropylene substrate layer 400, an adhesive layer 300, a polypropylene decorative layer 200, a polypropylene wear-resistant layer 100, a second PET film, a graining board, a third PET film, another polypropylene wear-resistant layer 100, another polypropylene decorative layer 200, another adhesive layer 300, another polypropylene substrate layer 400, another balance layer 600, another enhancement layer 500 and a fourth PET film are stacked in sequence from top to bottom, and subjected to hot pressing for lamination to obtain the semi-finished floorboard. The first PET film, the second PET film, the third PET film and the fourth PET film are each a high-transmittance PET film, and have a thickness of 0.1 mm-0.15 mm.

In an embodiment, the first PET film, the second PET film, the third PET film and the fourth PET film are each an isolating film, and are configured to separate the floorboard from the graining board to prevent the floorboard from being pressed together with the graining board. The graining board is configured to create a wood/stone grain texture effect on a floorboard surface.

In this embodiment, two surfaces of the graining board have grains. Therefore, the present disclosure can press two floorboards at a time, so as to ensure that the two floorboards are pressed by the graining board and improve the floorboard preparation efficiency.

### Examples

A method for preparing the semi-rigid polypropylene floorboard, including the following steps.

A polypropylene substrate layer 400 with a thickness of 2 mm is provided.

The substrate layer 400, an upper material and a lower material are subjected to the hot-pressing lamination, and a stacking order from top to bottom is as follows: a first polyethylene terephthalate (PET) film, the first enhancement sub-layer, a first balance layer, the first polypropylene substrate sub-layer, the first adhesive sub-layer, the first polypropylene decorative sub-layer, the first polypropylene wear-resistant sub-layer, a first stain-resistant transparent scratch-resistant layer, a second PET film, a graining board, a third PET film, a second stain-resistant transparent scratch-resistant layer, the second polypropylene wear-resistant sub-layer, the second polypropylene decorative sub-layer, the second adhesive sub-layer, the second polypropylene substrate sub-layer, the second balance sub-layer, the second enhancement sub-layer and a fourth PET film, where the first PET film, the second PET film, the third PET film and the fourth PET film are each a high-transmittance PET film, and have a thickness of 0.1 mm. And the hot-pressing lamination is performed at 160 °C and 15 MPa for 30 min.

A semi-finished floorboard resulted from the hot-pressing process is coated with the UV-curable clear lacquer by the roll coating machine and exposed to UV irradiation for curing, where a coating amount is 25 g/m², and the UV curing energy is 700 mj/cm².

After the coating of the UV-curable clear lacquer, the semi-finished floorboard is tempered at 85 °C for 2 min, and subjected to punching and trimming to obtain the semi-rigid polypropylene floorboard.

A maleic acid-modified polypropylene is made as follows.80-120 parts by weight of polypropylene, 3-5 parts by weight of maleic anhydride, 0.3-0.8 part by weight of isopropylbenzene peroxide and 0.4-0.6 part by weight of an antioxidant 1010 are evenly mixed and subjected to melt extrusion at 200°C to obtain the maleic acid-modified polypropylene.

The wear-resistant layer 100 is isotactic polypropylene, Hanwha Total Energies Petrochemical FH44N.

The polypropylene decorative layer 200 is atactic polypropylene, Hanwha Total Energies Petrochemical RJ760.

Specific conditions for preparing the semi-rigid polypropylene floorboard in Examples 1-6 are shown in Table 1.

**Table 1 Conditions for preparing the semi-rigid polypropylene**

| | | Example1 | | Examp le 2 | Examp le 3 | Examp led | Examp le5 | Examp le6 |
|---|---|---|---|---|---|---|---|---|
| Wear-resistant layer | Thickness/ mm | 0.2 | | 0.15 | 0.3 | 0.4 | 0.5 | 0.55 |
| Decorative layer | Thickness/ mm | 0.12 | | 0. 15 | 0. 08 | 0. 07 | 0. 07 | 0. 07 |
| Adhesive layer | Modification | Polypropylen e | 10 0 par ts | 100 parts | 100 parts | 100 parts | 100 parts | 100 parts |
| | | Maleic anhydride | 4.5 parts | 4.5 parts | 4.5 parts | 4.5 parts | 4.5 parts | 4.5 parts |
| | | Isopropylben zene peroxide | 0.4 par t | 0.4 part | 0.4 part | 0.4 part | 0.4 part | 0.4 part |
| | | Antioxidant 1010 | 0.5 par t | 0.5 part | 0.5 part | 0.5 part | 0.5 part | 0.5 part |
| | Thickness/ mm | 0.08 | | 0.1 | 0.12 | 0.2 | 0.15 | 0.05 |
| | Modificat ion | Inorganic filler | 70 par ts | 65 parts | 66 parts | 68 parts | 72 parts | 75 parts |
| | | Polypropylen e | 25 par ts | 20 parts | 20 parts | 18 parts | 15 parts | 22 parts |
| | | Polyethylene | 4 par ts | 1 part | 5 parts | 3 parts | 2 parts | 3 parts |
| | | Toughener | 3 par ts | 2 parts | 4 parts | 1 part | 5 parts | 4 parts |
| Substr ate layer | | Stabilizer | 1 par t | 0.3 part | 0.8 part | 0.3 part | 0.2 part | 0.4 part |
| | | Compatibiliz er | 0.4 par t | 0.2 part | 0.5 part | 0.4 part | 0.2 part | 0.4 part |
| | | Antioxidant | 0.0 4 par t | 0.02 part | 0.04 part | 0.02 part | 0.03 part | 0.05 part |
| | | Lubricant | 1 par t | 0.3 part | 0.3 part | 0.2 part | 0.4 part | 0.4 part |
| | Thickness/ mm | 1.5 | | 1.4 | 1.7 | 1.4 | 1.35 | 1.3 |
| Enhancem ent layer (Polyethyle ne polypropyl ene) | Thickness/ mm | 0.15 | | 0.2 | 0.2 | 0.2 | 0.2 | 0.1 |
| Balan ce layer | Thicknes s/mm | 0.15 | | 0.1 | 0.25 | 0.3 | 0.4 | 0.5 |
| | Coating amount of the modified UV curing clear lacquer (added with MECA containing amino-modified acrylic resin)/ (g/m²) | 15 | | 30 | 18 | 20 | 25 | 22 |

### Comparative example 1

The preparation steps and conditions are basically the same as those of Example 1, except that in the comparative example 1, there is no enhancement layer 500.

### Comparative example 2

The preparation steps and conditions are the basically same as those of Example 1, except that in the comparative example 2, there is no balance layer 600.

### Comparative example 3

The preparation steps and conditions are basically the same as those of Example 1, except that in the comparative example 3, the stain-resistant transparent scratch-resistant layer 700 is prepared by coating the ordinary UV wear-resistant layer (polyurethane acrylic resin).

### Comparative example 4

The preparation steps and conditions are basically the same as those of Example 1, except that in the comparative example 4, there is no adhesive layer 300.

Hardness, curvature, high temperature resistance test, and warpage change and dimensional shrinkage rate after high temperature baking at 80 °C for 6 h of floors prepared in Examples 1-6 and Comparative examples 1-4 are shown in Table 2.

**Table 2 Performance test result**

| | Thickness/m m EN426 | Hardness /D GB/T339 8 | Curvature / mm ISO2434 4 | Peel strength / MPa EN431 | UV lacquer adhesio n (Crosscut tester ISO rating) | Warpage/ mm ISO2399 9 | Dimension al shrinkage rate/% ISO23999 |
|---|---|---|---|---|---|---|---|
| Example 1 | 2.0 | 55 | 50 | 6.2 | 0 | 0.8 | 0.06 |
| Example 2 | 2.0 | 56 | 51 | 6.1 | 0 | 0.7 | 0.08 |
| Example 3 | 2.5 | 56 | 52 | 6.4 | 0 | 0.9 | 0.07 |
| Example 4 | 2.5 | 55 | 52 | 6.8 | 0 | 0.8 | 0.07 |
| Example 5 | 2.5 | 56 | 51 | 6.6 | 0 | 0.6 | 0.08 |
| Example 6 | 2.5 | 55 | 52 | 6.5 | 0 | 0.6 | 0.08 |
| Comparativ e example 1 | 2.0 | 55 | 45 | 6.2 | 0 | 0.8 | 0.1 |
| Comparativ e example 2 | 2.0 | 55 | 50 | 6.2 | 0 | 4.5 | 0.09 |
| Comparativ e example 3 | 2.0 | 55 | 52 | 6.2 | 3 | 0.8 | 0.06 |
| Comparativ e example 4 | 2.0 | 55 | 50 | 4.8 | 0 | 0.8 | 0.06 |

As shown in Table 2, the performance of the semi-rigid polypropylene floorboard in Examples 1-6 is stable. In Comparative examples 1-4, there is no enhancement layer 500 in Comparative example 1, and the curvature is low. There is no balance layer 600 in Comparative example 2, and the warpage change is large. The stain-resistant transparent scratch-resistant layer 700 is prepared by coating the ordinary UV wear-resistant layer (polyurethane acrylic resin) in Comparative example 3, and the UV lacquer adhesion is low. There is no adhesive layer300 in Comparative example 4, and the peel strength is low.

The floorboard surface of the semi-rigid polypropylene floorboard prepared by the preparation method for semi-rigid polypropylene floorboard of the present disclosure is flat and non-bending. The semi-rigid polypropylene floorboard has a whole thickness of 2.5 mm, a hardness of 55D, a curvature of 50 mm, and peel strength ≥ 6MPa. And after the high temperature baking at 80 °C for 6 h, the semi-rigid polypropylene floorboard has a warpage change ≤ 1 mm, and a dimensional shrinkage rate ≤ 0.1%.

Described above are only preferred embodiments of this application, and are not intended to limit the scope of this application. Any equivalent replacements or direct/indirect application in other arts without departing from the spirit of this application shall fall within the scope of this application defined by the appended claims.

## Claims

1. A semi-rigid polypropylene floorboard, comprising:
a polypropylene wear-resistant layer;
a polypropylene decorative layer;
an adhesive layer;
a polypropylene substrate layer; and
an enhancement layer;
**characterized in that** the polypropylene wear-resistant layer, the polypropylene decorative layer, the adhesive layer, the polypropylene substrate layer and the enhancement layer are arranged in sequence from top to bottom; the adhesive layer is made of a maleic acid-modified polypropylene resin; and a thickness of the adhesive layer is 0.05 mm-0.2 mm; and
the enhancement layer is made of modified polypropylene fiber.

2. The semi-rigid polypropylene floorboard according to claim 1, further comprising:
a balance layer;
wherein the balance layer is located between the polypropylene substrate layer and the enhancement layer, and a thickness of the balance layer is 0.1-0.5 mm.

3. The semi-rigid polypropylene floorboard according to claim 1, **characterized in that** a side of the polypropylene wear-resistant layer away from the polypropylene decorative layer is provided with a stain-resistant transparent scratch-resistant layer.

4. The semi-rigid polypropylene floorboard according to claim 3, **characterized in that** the stain-resistant transparent scratch-resistant layer is prepared by coating with a modified ultraviolet (UV)-curable clear lacquer at a coating amount of 15 g/m²-30 g/m²;
the polypropylene wear-resistant layer is made of a transparent wear-resistant polypropylene resin, and a thickness of the polypropylene wear-resistant layer is 0.15 mm-0.55 mm;
the polypropylene decorative layer is made of a printed polypropylene resin, and a thickness of the polypropylene decorative layer is 0.07 mm-0.15 mm; and
a thickness of the enhancement layer is 0.1 mm-0.3 mm.

5. The semi-rigid polypropylene floorboard according to claim 1, **characterized in that** a thickness of the polypropylene substrate layer is 4 mm-8 mm.

6. The semi-rigid polypropylene floorboard according to claim 1, **characterized in that** the polypropylene substrate layer comprises:
65-75 parts by weight of an inorganic filler;
15-25 parts by weight of a polypropylene resin;
1-5 parts by weight of a polyethylene resin;
1-5 parts by weight of a toughener;
0.5-1 part by weight of a stabilizer;
0.2-0.5 part by weight of a compatibilizer;
0.02-0.05 part by weight of an antioxidant; and
0.2-1 part by weight of a lubricant.

7. The semi-rigid polypropylene floorboard according to claim 6, **characterized in that** the inorganic filler is selected from the group consisting of silicon dioxide, calcium carbonate, aluminum oxide, zinc oxide, magnesium oxide, mica powder, kaolin and a combination thereof;
the polypropylene resin is selected from the group consisting of isotactic polypropylene, syndiotactic polypropylene, atactic polypropylene and a combination thereof;
the polyethylene resin is selected from the group consisting of low density polyethylene (LDPE), linear low-density polyethylene (LLDPE), medium density polyethylene (MDPE)and a combination thereof;
the toughener is selected from the group consisting of polyolefin elastomer (POE), ethyl vinyl acetate (EVA), ethylene propylene diene monomer (EPDM), styrene butadiene styrene (SBS) and a combination thereof;
the stabilizer is selected from the group consisting of a hindered amine light stabilizer, a polyolefin light stabilizer, a benzophenone stabilizer, a salicylic acid stabilizer and a combination thereof;
the compatibilizer is selected from the group consisting of maleic anhydride (MAH), ethyleneglycidyl methacrylate (EGMA), styrene-maleic anhydride (SM), ethylene-butyl acrylate, maleic anhydride and a combination thereof;
the antioxidant is selected from the group consisting of 2-(tert-butyl)-6-(5-chloro-2H-benzo[d][1,2,3]triazol-2-yl)-4-methylphenol, pentaerythritol tetrakis(3-(3,5-di-tert-butyl-4-hydroxyphenyl) propionate), octadecyl-3-(3',5'-di-t-butyl-4'-hydroxyphenyl)propionate, 4,4'-thio-bis(6-tert-butyl-m-methyl phenol) and a combination thereof; and
the lubricant is selected from a group consisting of paraffin, oxidized polyethylene wax, stearic acid and a combination thereof.

8. A method for preparing the semi-rigid polypropylene floorboard according to any one of claims 1-7, comprising:
subjecting the polypropylene wear-resistant layer, the polypropylene decorative layer, the adhesive layer, the polypropylene substrate layer and the enhancement layer to a hot-pressing lamination to obtain a semi-finished floorboard; wherein the hot-pressing lamination is performed at 150°C-160 °C and 8 MPa-15 MPa for 20 min-40 min;
tempering the semi-finished floorboard at 70°C-95 °C for 2 min-5 min to obtain a tempered product; and
subjecting the tempered product to punching and trimming to reach a required size, so as to obtain the semi-rigid polypropylene floorboard.

9. The method according to claim 8, further comprising:
before tempering, coating a UV-curable clear lacquer on the semi-finished floorboard through a roll coating machine followed by UV curing to obtain a stain-resistant transparent scratch-resistant layer;
wherein a coating amount of the UV-curable clear lacquer is 15 g/m²-30 g/m², and an energy of the UV curing is 400 mj/cm²-800 mj/cm².

10. The method according to claim 8, **characterized in that** the enhancement layer comprises a first enhancement sub-layer and a second enhancement sub-layer; the polypropylene wear-resistant layer comprises a first polypropylene wear-resistant sub-layer and a second polypropylene wear-resistant sub-layer; the polypropylene substrate layer comprises a first polypropylene substrate sub-layer and a second polypropylene substrate sub-layer; the adhesive layer comprises a first adhesive sub-layer and a second adhesive sub-layer; the polypropylene decorative layer comprises a first polypropylene decorative sub-layer and a second polypropylene decorative sub-layer; and the hot-pressing lamination is performed through steps of:
stacking a first polyethylene terephthalate (PET) film, the first enhancement sub-layer, a first balance layer, the first polypropylene substrate sub-layer, the first adhesive sub-layer, the first polypropylene decorative sub-layer, the first polypropylene wear-resistant sub-layer, a first stain-resistant transparent scratch-resistant layer, a second PET film, a graining board, a third PET film, a second stain-resistant transparent scratch-resistant layer, the second polypropylene wear-resistant sub-layer, the second polypropylene decorative sub-layer, the second adhesive sub-layer, the second polypropylene substrate sub-layer, the second balance sub-layer, the second enhancement sub-layer and a fourth PET film in sequence from top to bottom followed by hot pressing for lamination to obtain the semi-finished floorboard;
wherein the first PET film, the second PET film, the third PET film and the fourth PET film each have a thickness of 0.1 mm-0.15 mm.
